# FASCICULE DE BREVET EUROPEEN

(11) **EP 1 611 825 B1**
(45) Date de publication et mention de la délivrance du brevet: **02.05.2007**
(21) Numéro de dépôt: 05356100.7
(22) Date de dépôt: 08.06.2005
(51) Int. Cl.: A47J 43/07, A47J 43/044

(54) **Appareil electromenager de preparation culinaire avec une coupelle disposee entre un recipient et un boitier moteur superieur**
Elektrisches Haushaltsgerät mit einer zwischen einer Schale und einem oberen Motorgehäuse angeordneten Platte
Electrical houshold appliance with a dish element disposed between a container and a top motor housing

(30) Priorité: 29.06.2004 FR 0407117
(43) Date de publication de la demande: 04.01.2006
(73) Titulaire: SEB S.A., 69130 Ecully Cedex (FR)
(72) Inventeur: Charles Patrick, 65290 Louey (FR)
(74) Mandataire: Kiehl, Hubert

(56) Documents cités:
- FR-A- 2 729 588
- FR-A- 2 756 477
- FR-A- 2 843 535

## Description

La présente invention se rapporte au domaine technique général des appareils électroménagers de préparation culinaire comportant un boîtier moteur agencé au dessus d'un récipient de travail. La présente invention se rapporte plus particulièrement aux appareils du type précité comportant une coupelle entre le récipient de travail et le boîtier moteur.

La coupelle permet de protéger la partie inférieure du boîtier moteur des projections d'aliments. La coupelle peut également jouer un rôle de sécurité lorsque l'absence de la coupelle empêche le fonctionnement de l'appareil.

Il est connu du document WO96/22720 un appareil du type précité comportant une coupelle réalisée d'une seule pièce en matière thermoplastique à propriété élastique. Cette coupelle comporte des portions latérales déformables susceptibles d'être déformées lors de la mise en place de la coupelle dans le récipient de travail. Le boîtier moteur supérieur peut alors être disposé en position de fonctionnement sur la coupelle. Les portions latérales de la coupelle déformées par le récipient de travail permettent d'actionner un interrupteur agencé dans le récipient de travail. Une telle réalisation présente toutefois l'inconvénient d'une mise en place et d'un retrait de la coupelle malaisés.

Un but de la présente invention est de proposer un appareil du type précité présentant une meilleure ergonomie.

Un autre but de la présente invention est de proposer un appareil du type précité qui permette d'obtenir une étanchéité entre la coupelle et le récipient de travail au moins pour les préparations pâteuses, telles que par exemple les préparations pour bébés.

Un autre but de la présente invention est de proposer un appareil du type précité dont la réalisation soit simplifiée.

Un autre but de la présente invention est de proposer un appareil du type précité présentant une bonne sécurité.

Ces buts sont atteints avec un appareil électroménager de préparation culinaire comportant un récipient de travail, un outil de travail rotatif disposé dans le récipient de travail, une coupelle disposée dans le récipient de travail, un boîtier moteur disposé sur la coupelle, le boîtier moteur présentant une zone inférieure de support, la coupelle présentant une zone supérieure de support, le boîtier moteur comportant un moteur commandé par un interrupteur associé à un moyen de commande mobile entre une position de repos dans laquelle le fonctionnement de l'appareil n'est pas autorisé et une position active dans laquelle le fonctionnement de l'appareil est autorisé, du fait que la zone inférieure de support et/ou la zone supérieure de support est apte à être déformée élastiquement lorsqu'une pression axiale est exercée sur le boîtier moteur, le récipient de travail déplaçant alors le moyen de commande en position active. Cette construction permet d'obtenir un appareil présentant une bonne sécurité, du fait que le moyen de commande détecte la présence du récipient de travail. L'utilisation de l'appareil est particulièrement simple, aucun verrouillage n'étant nécessaire. Le nettoyage est également facilité. Si désiré, la géométrie de l'appareil peut permettre une mise en place des différents éléments sans orientation angulaire particulière. La pression exercée sur la coupelle par l'intermédiaire du boîtier moteur permet d'obtenir une étanchéité satisfaisante entre la coupelle et le récipient de travail. L'utilisation d'un joint n'est pas indispensable, notamment pour la réalisation de préparations pâteuses telles que les aliments pour bébé. Cette disposition simplifie la construction de l'appareil.

Selon un mode de réalisation, la zone inférieure de support est formée par au moins une paroi inclinée, et la zone supérieure de support est formée par au moins une languette élastique. La zone supérieure de support susceptible d'être déformée élastiquement appartient à la coupelle.

Avantageusement alors, la coupelle est réalisée d'une seule pièce dans une matière plastique présentant des propriétés de déformation élastique réversible. Cette disposition simplifie la construction et le nettoyage de la coupelle. La construction de la partie inférieure du boîtier est également très simple.

Avantageusement alors, le boîtier moteur présente des montants, la coupelle présentant des nervures prévues pour guider les montants lorsqu'une pression est exercée sur le boîtier moteur. Cette construction permet de limiter les efforts exercés sur les parties déformables élastiquement. Le mouvement axial du boîtier moteur est facilité.

Avantageusement alors, les montants sont agencés de manière alternée avec les parois inclinées. Cette disposition permet de réaliser le support élastique et le guidage du boîtier moteur sur un plus grand diamètre, ce qui limite les efforts parasites lorsqu'une pression est exercée sur le boîtier moteur.

Avantageusement encore, la largeur des nervures est supérieure à la largeur des montants. Cette disposition facilite la mise en place du boîtier moteur sur la coupelle, un indexage précis en rotation du boîtier moteur sur la coupelle n'étant pas nécessaire.

Selon un autre mode de réalisation, la zone inférieure de support est formée par au moins une languette élastique, et la zone supérieure de support est formée par au moins une paroi inclinée. La zone supérieure de support susceptible d'être déformée élastiquement appartient au boîtier moteur. De ce fait, la construction de la coupelle est très simple.

Avantageusement alors le boîtier moteur comporte une enveloppe inférieure réalisée dans une matière plastique présentant des propriétés de déformation élastique réversible. Cette disposition simplifie la construction de la partie inférieure du boîtier.

Selon une disposition avantageuse, la ou au moins l'une des languettes élastiques présente une zone d'épaisseur réduite. Cette disposition permet de former une zone préférentielle de flexion, l'extrémité libre de ladite languette étant alors plus rigide.

Selon une disposition avantageuse, l'appareil comporte au moins trois languettes élastiques coopérant chacune avec une paroi inclinée. Cette disposition permet d'assurer un mouvement axial lorsqu'une pression est exercée sur le boîtier moteur. Les languettes portent le boîtier moteur, indirectement, lorsque les languettes appartiennent à la coupelle, ou directement, lorsque les languettes appartiennent à la partie inférieure du boîtier moteur.

Selon une disposition avantageuse, une zone inférieure de guidage latéral du boîtier moteur est agencée en regard d'une zone supérieure de guidage latéral de la coupelle. Cette disposition permet de faciliter l'utilisation de l'appareil en contribuant au guidage du boîtier moteur, lorsqu'une pression est exercée sur le boîtier moteur.

L'invention sera mieux comprise à l'étude d'un exemple de réalisation et de variantes, pris à titre nullement limitatif, illustrés dans les figures annexées, dans lesquelles :
- la figure 1 est une vue d'une section verticale d'un appareil électroménager de préparation culinaire selon l'invention, représenté en position d'attente,
- la figure 2 est une vue partielle de l'appareil de la figure 1, représenté en position de fonctionnement,
- la figure 3 est une vue partielle selon une autre section verticale de l'appareil de la figure 1, représenté en position d'attente,
- la figure 4 est une vue de dessous en perspective du boîtier moteur supérieur de l'appareil montré à la figure 1,
- la figure 5 est une vue de dessus en perspective de la coupelle de l'appareil montré à la figure 1,
- la figure 6 est une variante de réalisation de l'appareil illustré aux figures 1 à 5.

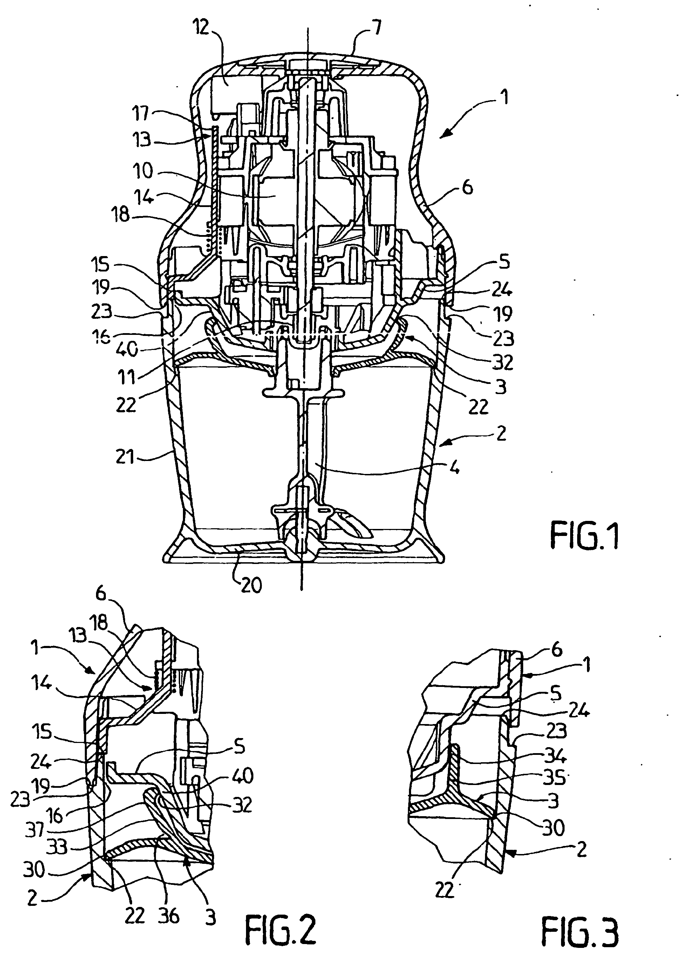

L'appareil électroménager de préparation culinaire montré à la figure 1 comporte un boîtier moteur 1 disposé sur un récipient de travail 2. Une coupelle 3 est disposée dans le récipient de travail 2.

Le boîtier moteur 1 comporte un moteur 10 entraînant une sortie d'entraînement 11. La sortie d'entraînement 11 est prévue pour recevoir l'extrémité supérieure d'un outil de travail rotatif 4 disposé dans le récipient de travail 2. La sortie d'entraînement 11 est agencée dans la face inférieure du boîtier moteur 1.

Le moteur 10 est commandé par un interrupteur 12 associé à un moyen de commande 13 mobile entre une position de repos dans laquelle le fonctionnement de l'appareil n'est pas autorisé, illustrée à la figure 1, et une position active dans laquelle le fonctionnement de l'appareil est autorisé, illustrée à la figure 2.

Plus particulièrement, le moyen de commande 13 est formé par une tige 14 comportant une extrémité inférieure 15 agencée dans un passage 16 du boîtier moteur 1 et une partie supérieure 17 prévue pour coopérer avec l'interrupteur 12. La tige 14 est montée contre un ressort de rappel 18.

Le boîtier moteur 1 comprend une enveloppe inférieure 5 comportant une ouverture pour la sortie d'entraînement 11, une enveloppe supérieure 6 logeant le moteur 10, et un cache supérieur 7 monté sur l'enveloppe supérieure 6.

Le passage 16 est ménagé dans la face inférieure du boîtier moteur 1. Plus particulièrement, le passage 16 est ménagé entre l'enveloppe inférieure 5 et l'enveloppe supérieure 6.

Le récipient de travail 2 comporte un fond 20 et une paroi latérale 21. Un rebord intérieur 22 est ménagé sur la face interne de la paroi latérale 21. Plus particulièrement, le rebord intérieur 22 est annulaire et présente une géométrie circulaire.

Un rebord extérieur 23 est ménagé sur la face externe de la paroi latérale 21. Plus particulièrement, le rebord extérieur 23 est annulaire et présente une géométrie circulaire.

La paroi latérale 21 présente un bord supérieur 24. Plus particulièrement, le bord supérieur 24 est annulaire et présente une géométrie circulaire.

Le moyen de commande 13 coopère avec le récipient de travail 2. Plus particulièrement, l'extrémité inférieure 15 de la tige 14 coopère avec le bord supérieur 24 du récipient de travail 2.

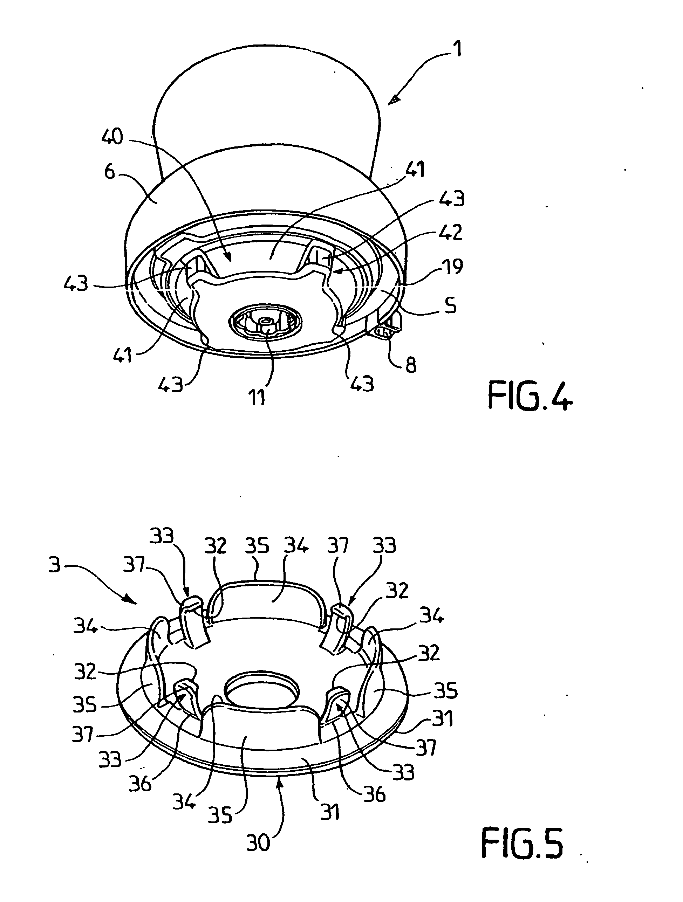

Le boîtier moteur 1 présente un bord inférieur 19, susceptible de venir en appui sur le rebord extérieur 23 lorsque qu'une pression axiale est exercée sur le boîtier moteur 1, tel que représenté à la figure 2. Le bord inférieur 19 est issu de l'enveloppe supérieure 6. Plus particulièrement, le bord inférieur 19 est annulaire et présente une géométrie circulaire, tel que représenté sur la figure 4. Un accroche cordon 8 est agencé du côté extérieur du bord inférieur 19.

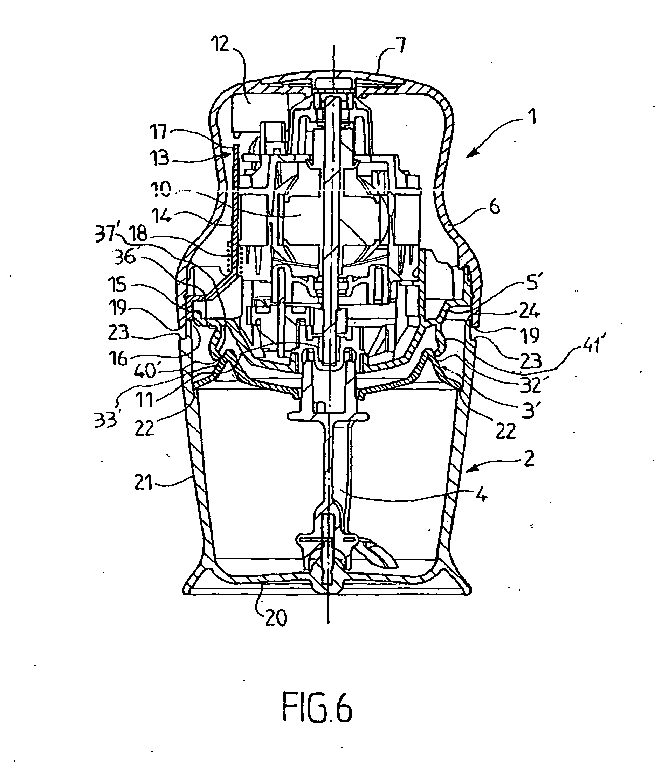

La coupelle 3 présente une zone inférieure d'appui 30 prévue pour reposer sur le rebord intérieur 22 du récipient de travail 2, mieux visible aux figures 2 et 3. Plus particulièrement, tel que représenté sur la figure 5, la zone inférieure d'appui 30 est formée par une collerette périphérique 31.

La coupelle 3 présente une zone supérieure de support 32 prévue pour recevoir le boîtier supérieur 1, visible sur les figures 1 et 2. La zone supérieure de support 32 est avantageusement agencée dans la moitié extérieure du diamètre de la coupelle 3. Plus particulièrement, tel que représenté sur la figure 5, la zone supérieure de support 32 est formée par quatre languettes élastiques 33 issues de la face supérieure de la coupelle 3.

La coupelle 3 présente une zone supérieure de guidage latéral 34 prévue pour coopérer avec le boîtier supérieur 1, visible sur la figure 3. La zone supérieure de guidage latéral 34 est avantageusement agencée dans la moitié extérieure du diamètre de la coupelle 3. Plus particulièrement, tel que représenté sur la figure 5, la zone supérieure de guidage latéral 34 est formée par quatre nervures 35 issues de la face supérieure de la coupelle 3.

Les languettes élastiques 33 et les nervures 35 sont agencées de manière alternée.

Les languettes élastiques 33 présentent une zone d'épaisseur réduite 36, visible aux figures 2 et 5 . La zone d'épaisseur réduite 36 est destinée à faciliter la flexion. Les languettes élastiques 33 présentent une extrémité libre 37 prévue pour coopérer avec les parois inclinées 41. L'extrémité libre 37 est mobile radialement. L'extrémité libre 37 forme une zone plus rigide. La zone supérieure de support 32 est ménagée sur l'extrémité libre 37.

La coupelle 3 peut être réalisée d'une seule pièce dans une matière plastique présentant des propriétés de déformation élastique réversible, tel que par exemple l'acétal ou le polycarbonate.

Le boîtier moteur 1 présente une zone inférieure de support 40, prévue pour coopérer avec la zone supérieure de support 32 de la coupelle 3, mieux visibles sur la figure 2. La zone inférieure de support 40 est avantageusement agencée dans la moitié extérieure du diamètre de l'enveloppe inférieure 5 du boîtier moteur 1. Plus particulièrement, tel que représenté sur la figure 4, la zone inférieure de support 40 est formée par quatre parois inclinées 41.

Le boîtier moteur 1 présente une zone inférieure de guidage latéral 42, prévue pour coopérer avec la zone supérieure de guidage latéral 34 de la coupelle 3, mieux visibles sur la figure 3. La zone inférieure de guidage latéral 42 est agencée en regard de la zone supérieure de guidage latéral 34 lorsque le boîtier moteur 1 est en place sur la coupelle 3. La zone inférieure de guidage latéral 42 est avantageusement agencée dans la moitié extérieure du diamètre de l'enveloppe inférieure 5 du boîtier moteur 1.

Plus particulièrement, tel que représenté sur la figure 4, la zone inférieure de guidage latéral 42 est formée par quatre montants 43. Les montants 43 sont agencés de manière alternée avec les parois inclinées 41. Les montants 43 et les parois inclinées 41 sont issus de l'enveloppe inférieure 5 du boîtier 1. Tel que montré sur la figure 5, les languettes élastiques 33 sont agencées de manière alternée avec les nervures 35. La largeur des nervures 35 est supérieure à la largeur des languettes élastiques 33. La largeur des parois inclinées 41 est supérieure à la largeur des montants 43.

Le fonctionnement de l'appareil illustré aux figures 1 à 5 est le suivant.

L'utilisateur met en place l'outil de travail rotatif 4 dans le récipient de travail 2, et dispose la coupelle 3 sur le rebord intérieur 22 du récipient de travail 2. La coupelle 3 peut être mise en place sans orientation particulière. La zone inférieure d'appui 30 annulaire coopérant avec le rebord intérieur 22 permet d'assurer un niveau d'étanchéité suffisant pour les préparations pâteuses telles que les préparations pour bébé.

L'utilisateur positionne ensuite le boîtier moteur 1 sur la coupelle 3, de manière à ce que les languettes élastiques 33 soient disposées en regard des parois inclinées 41. Lorsque les parois inclinées 41 reposent sur les languettes élastiques 33, les montants 43 sont disposés en regard des nervures 35. La zone inférieure de support 40 est supportée par la zone supérieure de support 32. Le boîtier moteur 1 repose sur la coupelle 3.

L'utilisateur peut alors exercer une pression sur le dessus du boîtier moteur 1 pour mettre en marche l'appareil. Les parois inclinées 41 écartent alors les languettes élastiques 33. Le bord supérieur 24 repousse l'extrémité inférieure 15 de la tige 14, tel que représenté à la figure 2. Le mouvement de la tige 14 actionne l'interrupteur 12 et permet la mise en marche du moteur 10. Ainsi la zone inférieure de support et/ou la zone supérieure de support 32 est déformée élastiquement lorsqu'une pression axiale est exercée sur le boîtier moteur 1, le récipient de travail 2 déplaçant alors le moyen de commande 13 en position active. Les nervures 35 guident les montants 43 et facilitent le mouvement du boîtier moteur 1 selon une direction axiale. Ainsi la zone supérieure de guidage latéral 34 de la coupelle 3 coopérant avec la zone inférieure de guidage latéral 42 du boîtier moteur 1 exercent un guidage vertical. Le bord inférieur 19 du boîtier moteur 1 vient en appui sur le rebord extérieur 23 du récipient de travail 2, tel que représenté à la figure 2. La déformation des languettes élastiques 33 est ainsi limitée.

Lorsque l'utilisateur relâche la pression exercée sur le boîtier moteur 1, les languettes élastiques 33 déformées élastiquement exercent un effort de rappel et soulèvent le boîtier moteur 1 par rapport au récipient de travail 2. Le bord supérieur 24 s'écarte de l'extrémité inférieure 15 de la tige 14, tel que représenté à la figure 1. Le moteur 10 n'est plus alimenté. Le guidage vertical exercé par la zone supérieure de guidage latéral 34 de la coupelle 3 coopérant avec la zone inférieure de guidage latéral 42 du boîtier moteur 1 favorise la remontée du boîtier moteur 1 selon la direction axiale.

L'appareil proposé est ainsi d'une utilisation très simple, tout en étant d'une construction économique.

A titre de variante la zone supérieure de support 32 peut être formée par au moins une languette élastique 33, la zone inférieure de support 40 étant alors formée par au moins une paroi inclinée 41.

A titre de variante, au moins une languette élastique peut être ménagée sur le boîtier moteur 1, notamment sur la face inférieure de l'enveloppe inférieure 5, la ou les parois inclinées correspondantes étant alors ménagées sur la coupelle 3. Le boîtier moteur 1 peut alors composer une enveloppe inférieure réalisée dans une matière plastique présentant des propriétés de déformation élastique réversible.

La variante de réalisation illustrée à la figure 6 diffère de l'exemple de réalisation illustré aux figures 1 à 5 en ce que la zone inférieure de support 40' est formée par quatre languettes élastiques 41', et en ce que la zone supérieure de support 32' est formée par quatre parois inclinées 33'. Ainsi la zone inférieure de support 40' est déformée élastiquement lorsqu'une pression axiale est exercée sur le boîtier moteur 1', le récipient de travail 2 déplaçant alors le moyen de commande 13 en position active. Le boîtier moteur 1' comporte une enveloppe inférieure 5' réalisée dans une matière plastique présentant des propriétés de déformation élastique réversible. La languette élastique 41' est ménagée sur le boîtier moteur 1' sur la face inférieure de l'enveloppe inférieure 5'. Les parois inclinées 33' correspondantes sont ménagées sur la coupelle 3'. Les languettes élastiques 41' présentent une zone d'épaisseur réduite 36'. Les languettes élastiques 41' présentent une extrémité libre 37' mobile radialement.

A titre de variante la zone inférieure de support 40' peut être formée par au moins une languette élastique 41', la zone supérieure de support 32' étant formée par au moins une paroi inclinée 33'. Ainsi la zone inférieure de support est déformée élastiquement lorsqu'une pression axiale est exercée sur le boîtier moteur, le récipient de travail déplaçant alors le moyen de commande en position active.

A titre de variante l'appareil peut comporter au moins une languette élastique 33, 41' coopérant avec une paroi inclinée 41, 33'. A

A titre de variante la ou au moins une des languettes élastiques 33, 41' présente une zone d'épaisseur réduite 36, 36'.

A titre de variante la ou au moins une des languettes élastiques 33, 41' présente une extrémité libre 36, 37' mobile radialement.

A titre de variante l'appareil peut comporter au moins trois languettes élastiques 33, 41' coopérant chacune avec une paroi inclinée 41, 33'.

La présente invention n'est nullement limitée à l'exemple de réalisation décrit et à ses variantes, mais englobe de nombreuses modifications dans le cadre des revendications.

## Revendications

1. Appareil électroménager de préparation culinaire comprenant un récipient de travail (2), un outil de travail rotatif (4) disposé dans le récipient de travail (2), une coupelle (3 ; 3') disposée dans le récipient de travail (2), un boîtier moteur (1 ; 1') disposé sur la coupelle (3; 3'), le boîtier moteur (1 ; 1') présentant une zone inférieure de support (40 ; 40'), la coupelle (3 ; 3') présentant une zone supérieure de support (32 ; 32'), le boîtier moteur (1 ; 1') comportant un moteur (10) commandé par un interrupteur (12) associé à un moyen de commande (13) mobile entre une position de repos dans laquelle le fonctionnement de l'appareil n'est pas autorisé et une position active dans laquelle le fonctionnement de l'appareil est autorisé, **caractérisé en ce que** la zone inférieure de support (40') et/ou la zone supérieure de support (32) est apte à être déformée élastiquement lorsqu'une pression axiale est exercée sur le boîtier moteur (1 ; 1'), le récipient de travail (2) déplaçant alors le moyen de commande (13) en position active.

2. Appareil électroménager de préparation culinaire selon la revendication 1, **caractérisé en ce que** la zone inférieure de support (40) est formée par au moins une paroi inclinée (41) et **en ce que** la zone supérieure de support (32) est formée par au moins une languette élastique (33).

3. Appareil électroménager de préparation culinaire selon la revendication 2, **caractérisé en ce que** la coupelle (3) est réalisée d'une seule pièce dans une matière plastique présentant des propriétés de déformation élastique réversible.

4. Appareil électroménager de préparation culinaire selon la revendication 3, **caractérisé en ce que** le boîtier moteur (1) présente des montants (43), la coupelle (3) présentant des nervures (35) prévues pour guider les montants (43) lorsqu'une pression est exercée sur le boîtier moteur (1).

5. Appareil électroménager de préparation culinaire selon la revendication 4, **caractérisé en ce que** les montants (43) sont agencés de manière alternée avec les parois inclinées (41).

6. Appareil électroménager de préparation culinaire selon l'une des revendications 4 ou 5, **caractérisé en ce que** la largeur des nervures (35) est supérieure à la largeur des montants (43).

7. Appareil électroménager de préparation culinaire selon la revendication 1, **caractérisé en ce que** la zone inférieure de support (40') est formée par au moins une languette élastique (41') et **en ce que** la zone supérieure de support (32') est formée par au moins une paroi inclinée (33').

8. Appareil électroménager de préparation culinaire selon la revendication 7, **caractérisé en ce que** le boîtier moteur (1') comporte une enveloppe inférieure (5') réalisée dans une matière plastique présentant des propriétés de déformation élastique réversible.

9. Appareil électroménager de préparation culinaire selon l'une des revendications 2 à 8, **caractérisé en ce que** la ou au moins l'une des languettes élastiques (33 ; 41') présente une zone d'épaisseur réduite (36 ; 36').

10. Appareil électroménager de préparation culinaire selon l'une des revendications 2 à 9, **caractérisé en ce que** la ou au moins l'une des languettes élastiques (33 ; 41') présente une extrémité libre (37 ; 37') mobile radialement.

11. Appareil électroménager de préparation culinaire selon l'une des revendications 2 à 10, **caractérisé en ce qu**'il comporte au moins trois languettes élastiques (33 ; 41') coopérant chacune avec une paroi inclinée (41 ; 33').

12. Appareil électroménager de préparation culinaire selon l'une des revendications 1 à 11, **caractérisé en ce qu'**une zone inférieure de guidage latéral (42) du boîtier moteur (1 ; 1') est agencée en regard d'une zone supérieure de guidage latéral (34) de la coupelle (3 ; 3').

## Claims

1. A food-preparation household electrical appliance comprising a work receptacle (2), a rotary work tool (4) disposed in the work receptacle (2), a dished lid (3; 3') disposed in the work receptacle (2), and a motor housing (1; 1') disposed on the dished lid (3; 3'), the motor housing (1; 1') having a bottom support zone (40; 40'), the dished lid (3; 3') having a top support zone (32; 32'), and the motor housing (1; 1') containing a motor (10) controlled by a switch (12) associated with control means (13) mounted to move between a rest position in which the appliance is not allowed to operate and an active position in which the appliance is allowed to operate, said food-preparation household electrical appliance being **characterized in that** the bottom support zone (40') and/or the top support zone (32) is/are suitable for being deformed elastically when axial pressure is exerted on the motor housing (1; 1'), the work receptacle (2) then moving the control means (13) into the active position.

2. A food-preparation household electrical appliance according to claim 1, **characterized in that** the bottom support zone (40) is formed by at least one inclined wall (41) and **in that** the top support zone (32) is formed by at least one resilient tongue (33).

3. A food-preparation household electrical appliance according to claim 2, **characterized in that** the dished lid (3) is made in one piece from a plastics material presenting reversible elastic deformation properties.

4. A food-preparation household electrical appliance according to claim 3, **characterized in that** the motor housing (1) has uprights (43), the dished lid (3) having ribs (35) designed to guide the uprights (43) when pressure is exerted on the motor housing (1).

5. A food-preparation household electrical appliance according to claim 4, **characterized in that** the uprights (43) are arranged in alternation with the inclined walls (41).

6. A food-preparation household electrical appliance according to claim 4 or claim 5, **characterized in that** the width of the ribs (35) is greater than the width of the uprights (43).

7. A food-preparation household electrical appliance according to claim 1, **characterized in that** the bottom support zone (40') is formed by at least one resilient tongue (41'), and **in that** the top support zone (32') is formed by at least one inclined wall (33').

8. A food-preparation household electrical appliance according to claim 7, **characterized in that** the motor housing (1') has a bottom casing (5') made of a plastics material having reversible elastic deformation properties.

9. A food-preparation household electrical appliance according to any one of claims 2 to 8, **characterized in that** the or at least one of the resilient tongue(s) (33; 41') has a zone of reduced thickness (36; 36').

10. A food-preparation household electrical appliance according to any one of claims 2 to 9, **characterized in that** the or at least one of the resilient tongue(s) (33; 41') has a free end (37; 37') that is mounted to move radially.

11. A food-preparation household electrical appliance according to any one of claims 2 to 10, **characterized in that** it is provided with at least three resilient tongues (33; 41'), each of which co-operates with a respective inclined wall (41; 33').

12. A food-preparation household electrical appliance according to any one of claims 1 to 11, **characterized in that** bottom lateral guidance zone (42) of the motor housing (1; 1') is arranged facing a top lateral guidance zone (34) of the dished lid (3; 3').

## Patentansprüche

1. Elektrohaushaltsgerät zur Nahrungsmittelzubereitung, mit einem Arbeitsbehälter (2), einem im Arbeitsbehälter (2) angeordneten, drehbaren Arbeitswerkzeug (4), einer im Arbeitsbehälter (2) angeordneten Schale (3; 3'), einem auf der Schale (3; 3') angeordneten Motorgehäuse (1; 1'), wobei das Motorgehäuse (1; 1') einen unteren Haltebereich (40; 40') aufweist, die Schale (3; 3') einen oberen Haltebereich (32; 32') aufweist, wobei das Motorgehäuse (1; 1') einen Motor (10) aufweist, der von einem Schalter (12) gesteuert wird, welcher einem Steuermittel (13) zugeordnet ist, das zwischen einer Ruhestellung, in der der Betrieb des Geräts nicht gestattet ist, und einer aktiven Stellung beweglich ist, in der der Betrieb des Geräts gestattet ist, **dadurch gekennzeichnet, dass** der untere Haltebereich (40') und/oder der obere Haltebereich (32) elastisch verformt werden kann, wenn ein axialer Druck auf das Motorgehäuse (1; 1') ausgeübt wird, wobei der Arbeitsbehälter (2) dann das Steuermittel (13) in die aktive Stellung verlagert.

2. Elektrohaushaltsgerät zur Nahrungsmittelzubereitung nach Anspruch 1, **dadurch gekennzeichnet, dass** der untere Haltebereich (40) durch mindestens eine geneigte Wand (41) gebildet ist und der obere Haltebereich (32) durch mindestens eine elastische Lasche (33) gebildet ist.

3. Elektrohaushaltsgerät zur Nahrungsmittelzubereitung nach Anspruch 2, **dadurch gekennzeichnet, dass** die Schale (3) einstückig aus einem Kunststoff hergestellt ist, der Eigenschaften zur reversiblen elastischen Verformung besitzt.

4. Elektrohaushaltsgerät zur Nahrungsmittelzubereitung nach Anspruch 3, **dadurch gekennzeichnet, dass** das Motorgehäuse (1) Streben (43) aufweist, wobei die Schale (3) Rippen (35) aufweist, die zur Führung der Streben (43) vorgesehen sind, wenn ein Druck auf das Motorgehäuse (1) ausgeübt wird.

5. Elektrohaushaltsgerät zur Nahrungsmittelzubereitung nach Anspruch 4, **dadurch gekennzeichnet, dass** die Streben (43) abwechselnd mit den geneigten Wänden (41) angeordnet sind.

6. Elektrohaushaltsgerät zur Nahrungsmittelzubereitung nach Anspruch 4 oder 5, **dadurch gekennzeichnet, dass** die Rippen (35) breiter sind als die Streben (43).

7. Elektrohaushaltsgerät zur Nahrungsmittelzubereitung nach Anspruch 1, **dadurch gekennzeichnet, dass** der untere Haltebereich (40') durch mindestens eine elastische Lasche (41') gebildet ist und der obere Haltebereich (32') durch mindestens eine geneigte Wand (33') gebildet ist.

8. Elektrohaushaltsgerät zur Nahrungsmittelzubereitung nach Anspruch 7, **dadurch gekennzeichnet, dass** das Motorgehäuse (1') eine untere Hülle (5') aufweist, die aus einem Kunststoff mit Eigenschaften zur reversiblen elastischen Verformung hergestellt ist.

9. Elektrohaushaltsgerät zur Nahrungsmittelzubereitung nach einem der Ansprüche 2 bis 8, **dadurch gekennzeichnet, dass** die oder mindestens eine der elastische(n) Lasche(n) (33; 41') einen Bereich (36; 36') mit einer geringeren Dicke aufweist.

10. Elektrohaushaltsgerät zur Nahrungsmittelzubereitung nach einem der Ansprüche 2 bis 9, **dadurch gekennzeichnet, dass** die oder mindestens eine der elastische(n) Lasche(n) (33; 41') ein freies, radial bewegliches Ende (37; 37') aufweist.

11. Elektrohaushaltsgerät zur Nahrungsmittelzubereitung nach einem der Ansprüche 2 bis 10, **dadurch gekennzeichnet, dass** es mindestens drei elastische Laschen (33; 41') aufweist, die jeweils mit einer geneigten Wand (41; 33') zusammenwirken.

12. Elektrohaushaltsgerät zur Nahrungsmittelzubereitung nach einem der Ansprüche 1 bis 11, **dadurch gekennzeichnet, dass** ein unterer Bereich (42) zur seitlichen Führung des Motorgehäuses (1; 1') gegenüber einem oberen Bereich (34) zur seitlichen Führung der Schale (3; 3') angeordnet ist.
